# EUROPEAN PATENT APPLICATION

(11) **EP 4 301 012 A1**
(43) Date of publication of application: **03.01.2024**
(21) Application number: 22181174.8
(22) Date of filing: 27.06.2022
(51) Int. Cl.: H04W 4/70, H04L 67/51

(54) **ESTABLISHMENT AND DISCOVERY OF AN APPLICATION-RELATED DEFAULT PROTOCOL DATA UNIT SESSION IN 5G NETWORKS**

(71) Applicant: Siemens Aktiengesellschaft, 80333 München (DE)
(72) Inventor: Fries, Steffen, 85598 Baldham (DE); Walewski, Joachim, 82008 Unterhaching (DE)
(74) Representative: Siemens Patent Attorneys

(57) **Abstract**

The invention discloses an automated method for enabling an enterprise communication system (3) to contact a device application of a device (1) which comprises a (wireless) transceiver (1.1) and which is connected to a 5G communication network (3) via a (radio) communication access network,
- whereby an enterprise application of the enterprise communication system (3) is subscribed to PDU updates from the 5G communication network (2),
- whereby the device application has a unique device application identifier,
- whereby a unique device identifier is provided to the device (1), and
- whereby the device identifier is used by the device (1) during onboarding,
characterized by the steps:
i) a PDU (Protocol Data Unit) session is requested by the device (1) from the 5G communication network (2),
ii) the requested PDU session is created by the 5G communication network (2),
iii) information about the new PDU session is added by the session management function (SMF) to a data base of the 5G communication network (2),
iv) the enterprise application is informed by the 5G communication network (2) about the new PDU session,
v) the device identifier or the device application identifier is inferred by the enterprise application from the information provided by the session management function (SMF),
vi) if the device application identifier and/or the device identifier matches a list of identifiers or application types, the enterprise application is contacting the device application by using the information contained in the received PDU event notification, whereby the list is stored in the enterprise communication system.

## Description

### FIELD OF THE INVENTION

The present invention relates to an automated method for enabling an enterprise communication system to contact a device application of a device which comprises a wireless transceiver and which is connected to a 5G communication network via a (radio) communication access network. The present invention further relates to an arrangement designed to run the method.

### BACKGROUND OF THE INVENTION

This invention disclosure report addresses the following scenario. An application (= device application) resides on a mobile or a static device, and the device comprises a 5G (wireless) transceiver. The transceiver is henceforth also referred to as user equipment (short: UE). The UE is onboarded onto a 5G network. An enterprise application that is connected to the 5G network via a user plane function (short: UPF) can then, in principle, communicate with the device application via the 5G network. For this, the UE must request a protocol data unit (short: PDU) session between the UE and the UPF from the 5G network. Once the session is initiated, the UE can notify the enterprise application that it can now be reached via the 5G network.

However, some device applications, for example smoke detectors and light switches, act as a server and expect to be connected by the enterprise application and not the other way round, i.e., they do not act as client connecting to the enterprise application by themselves. This generates a chicken-and-egg problem: the device application expects to be connected by the enterprise application, but the enterprise application does not know the IP address of the UE associated with the device application and the enterprise application can also not request a PDU session to the related UE.

Some solutions that contribute to solving this problem are disclosed in the prior art, for example:
1. The UE is provided with the enterprise application address and the data network name through an off-line mechanism, for instance by configuring the UE manually or via another channel (Bluetooth, WLAN ...) .
2. The UE or the enterprise application may use a discovery mechanism like mDNS (Multicast DNS, RFC 6762 or https://en.wikipedia.org/wiki/Multicast_DNS) to resolve the hostname to a local IP address if no DNS server is locally available. Here, the enterprise application would send a message to a URL that is unique for the device application. For instance, a URL representing the device application identifier.
3. Also known is the mechanism of dynDNS (dynamic DNS, https://de.wikipedia.org/wiki/Dynamisches_DNS). It enables the dynamic update of the IP address of a computer to a DNS name. This can be utilized to cope with the renewal of IP addresses for UE when a server residing "behind" the UE shall be reachable under a fixed name. Here, the device would need to associate its IP address with its URL on the DNS server.
4. An applicant's solution solves the problem of reversing the client and server roles at the TLS layer between two hosts during TCP channel opening. This addresses situations where the TCP client-here the device with the UE-shall act as TLS server. This solution relates to the channel establishment once the IP address is known.
5. The European patent application 22173744.8 describes how to signal the devise provisioning method (including information about the provisioning server like IP address, authentication credential, etc.) to the device with which a session is established. This approach applies to provisioning methods originating from a device (acting as client) but also from an enterprise application or a provisioning service. Here, the address of the provisioning server and related information is provided by the network during network access.
6. Known is the mechanism of publish and subscribe (https://en.wikipedia.org/wiki/Publish%E2%80%93subscribe_patt ern), which allows a publisher to send a message to a group of receivers that the publisher may not know. The subscriber of a specific source and/or message will receive this message. Technically this may be realized by different multicast addresses or by a middleware, managing subscribers to specific messages or events. This approach is utilized in protocols like XMPP, Jabber, and OPC-UA. In the context of the problem in section one, the session management function (SMF) acts as the publisher and the enterprise application as subscriber.

### SUMMARY OF THE INVENTION

The objective of the present invention is to provide a solution for enterprise applications to reach/contact server applications on devices connected via a (wireless) transceiver to a 5G communication network.

To accomplish the objective, the present invention provides a solution according to the independent claims. Advantageous embodiments are provided in the dependent claims.

According to an aspect of the disclosure, an enterprise communication infrastructure is enabled to query servers on devices that are connected to a 5G communication system via a (radio) communication access network. This is done by utilizing state-of-the-art approaches for publish subscribe and reverse session establishment and combining them with modified 5G features.

The invention claims an automated method for enabling an enterprise communication system to contact a device application of a device which comprises a wireless transceiver and which is connected to a 5G communication network via a (radio) communication access network,
- whereby an enterprise application of the enterprise communication system is subscribed to PDU session updates from the 5G communication network,
- whereby the device application has a unique device application identifier,
- whereby a unique device identifier is provided to the device, and
- whereby the device identifier is used by the device during onboarding,
whereby:
i) a PDU session is requested by the device from the 5G communication network, (This request can be triggered by the application middleware or the device application itself.)
ii) the requested PDU session is created by the 5G communication network,
iii) information about the new PDU session is added by the session management function (SMF) to a data base of the 5G communication network,
iv) the enterprise application is informed by the 5G communication network about the new PDU session,
v) the device identifier or the device application identifier is inferred by the enterprise application from the information provided by the SMF,
vi) if the device application identifier and/or the device identifier matches a list of identifiers or application types (e.g., "light switch", "light sensor"), the enterprise application contacts the device application by using the information contained in the received PDU event notification, whereby the list is stored in the enterprise communication system. The list contains information about the devices the enterprise application needs to interact with.

In a further embodiment of the method the device identifier and/or the device application identifier is related to a unique GPSI (Generic Public Subscription Identifier).

"Related" means that the device application identifier may not be part of the GPSI in cleartext but in a protected form to ensure that the 5G network may not have access to this information. Protection may be achieved by encrypting the device application information with a symmetric key known to both, the application generating the GPSI and the enterprise application. The encryption can be done using known encryption algorithms like AES (Advanced Encryption Standard) or 3DES (Triple Data Encryption Standard). Alternatively, the information may be encrypted using asymmetric methods like RSA (Rivest, Shamir, Adleman) or ECIES (Elliptic Curve Integrated Encryption Scheme).

In a further embodiment of the method, the generation of the GPSI is based on the device application identifier to guarantee a one-to-one relation between GSPI and the device application identifier.

In a further embodiment of the method, the GPSI generation is also based on the device identifier to guarantee a one-to-one relation between the GPSI and the device identifier.

In a further embodiment of the method, the GPSI is part of the PDU session information that is stored in a pertinent data base of the SMF.

In a further embodiment of the method, the enterprise application retrieves the wireless transceiver's address and the GPSI from the SMF event notification that is issued after the new PDU session has been established,
the enterprise application retrieves the device application identifier from the GPSI, and
if provided, the enterprise application also retrieves the device identifier from the GPSI.

In a further embodiment of the method, the enterprise application uses the IP address contained in the SMF event notification for sending data packets to the device application via the user plane function (UPF).

In a further embodiment of the method, the device identifier and/or the device application identifier is related to an IPv6 address, which is provided to the wireless transceiver by the device application or a device middleware, whereby the IPv6 address contains the device application identifier to ensure a one-to-one relation between the IPv6 address and the device application identifier.

"Related" and "contains" means that the device application identifier may not be part of the IPv6 in cleartext but in a protected form to ensure that the 5G network may not have access to this information. Protection may be achieved by encrypting the device application information a symmetric key known to both, the application generating the GPSI and the enterprise application. The encryption can be done using known encryption algorithms like AES (Advanced Encryption Standard) or 3DES (Triple Data Encryption Standard) or other. Alternatively, the information may be encrypted using asymmetric methods like RSA (Rivest, Shamir, Adleman) or ECIES (Elliptic Curve Integrated Encryption Scheme).

In a further embodiment of the method, the IPv6 address contains the device identifier to ensure a one-to-one relation between the IPv6 address and the device identifier.

In a further embodiment of the method, the enterprise application retrieves the (wireless) transceiver's IPv6 address from the SMF event notification that is issued after the new PDU session has been established.

In a further embodiment of the method, the enterprise application retrieves the device application identifier from the IPv6 address.

In a further embodiment of the method, the enterprise application also retrieves the device identifier from the IPv6 address (if provided).

In a further embodiment of the method, the enterprise application uses the IPv6 address when sending data packets to the device application via the user plane function (UPF).

The invention further claims an arrangement designed to perform the method according to the invention.

Advantage of the invention are:
1) Support of server applications on devices connected via a UE to the 5G network.
2) No pre-configuration of the mobile device (application) with the enterprise application's address or that of a domain name resolution server is needed (see section 2).
3) When using an intermediary application,
   a. one does not need to plan what enterprise applications can contact the device application (as is the case for the state of the art).
   b. the IP addresses of the enterprise applications receiving the SMF event notification(s) are not divulged to the 5G system, nor how many enterprise applications receive this information.
4) Neither the device application identifier, nor the device identifier, are leaked to the 5G network.

### In a further embodiment

Further benefits and advantages of the present invention will become apparent after a careful reading of the detailed description with appropriate reference to the accompanying drawings.

### BRIEF DESCRIPTION OF THE DRAWINGS

- FIG. 1: shows a block diagram of the arrangement, and
- FIG. 2A-C: shows a flow-chart of an embodiment of the method.

### DETAILED DESCRIPTION OF THE INVENTION

Two variations of the solution are disclosed: one that leverages the generic public subscription identifier (GPSI) and one that leverages IPv6 addresses.

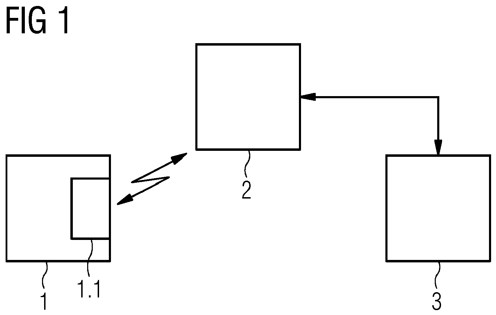

Both variations are based on the same arrangement as illustrated in FIG. 1. FIG. 1 shows a block diagram of an arrangement comprising a device 1 with a (wireless) transceiver, a 5 G communication network (2), and an enterprise communication system 3 comprising an enterprise application, e.g., a provisioning server. The device 1 and the enterprise communication system are linked to the 5G communication network via a (radio) access link.

Both variations comprise the following steps:
I. Initiation
   a. The mobile device (1) is equipped with a unique device identifier (e.g., GPSI, IPv6 address).
   b. An application on the enterprise communication system 3 subscribes to event notifications from the network's session management function (SMF).
II. The identifier is provided to the UE, for instance by the device middleware or during previous manual UE configuration.
III. The UE uses the identifier during onboarding.
IV. Thereafter, the UE requests a PDU session from the network. This session is also referred to as connection. This request can be triggered by the application middleware or the device application.
V. The network creates the requested PDU session.
VI. The SMF adds information about this new PDU session to the network data base.
VII. The enterprise application is notified about this new PDU session. (See step I.b.)
VIII. The enterprise application infers the device application identifier from the information provided by the SMF.
IX. If the identifier matches a list of identifiers or application types ("light switch", "light sensor"), the enterprise application contacts the device application by using the information contained in the received SMF event notification.

### Particularities of an GPSI-based embodiment

Regarding step I.a: the GPSI generation is based on the device application identifier, and there is a one-to-one relation between GSPI and the device application identifier. In a refinement of the disclosure, the GPSI is also based on the device identifier, and there is a one-to-one relation between the GPSI and the device identifier.

Regarding step VI: the GPSI is part of the PDU session information that is stored in the pertinent SMF data base.

Regarding step VIII: the enterprise application retrieves the UE's IP address and the GPSI from the SMF event notification that is issued after the new PDU session has been established. The enterprise application retrieves the device application identifier from the GPSI. If provided, the enterprise application also retrieves the device identifier from the GPSI.

Regarding step IX: the enterprise application uses the IP address contained in the SMF event notification for sending data packets to the device application via the UPF.

### Particularities of an IPv6-based embodiment

Regarding step II: an IPv6 address is provided to the UE by the device application or the device middleware. This address contains the device application identifier, and there is a one-to-one relation between the IPv6 address and the device application identifier. Optionally, the IPv6 address also contains the device identifier, and there is a one-to-one relation between the IPv6 address and the device identifier.

Regarding step VIII: the enterprise application retrieves the UE's IPv6 address from the SMF event notification that is issued after the new PDU session has been established. The enterprise application retrieves the device application identifier from the IPv6 address. If provided, the enterprise application also retrieves the device identifier from the IPv6 address.

Regarding step IX: the enterprise application uses the IPv6 address when sending data packets to the device application via the UPF.

### Further embodiments

A. The device identifier or device application identifier is stored in the GSPI or the IPv6 address in such a way that the 5G system cannot infer said identifier. This can, for instance, be achieved by encrypting the device (application) identifier. This can be done by symmetric encryption, in which both the application generating the GPSI or the IPv6 address, and the enterprise application need to know the key. Alternatively, this can be done by asymmetric encryption (either directly using RSA or indirectly using ECDSA in conjunction with a semi-static Diffie Hellman key agreement), known as ECIES. In this case, the application generating the GPSI or the IPv6 address needs to know the public key of the application on the enterprise side.
B. Instead of the enterprise application, an intermediary application subscribes to event notification from the SMF. This application distributes the information received from the SMF to other applications. This can, for instance, be realised through a publish-subscribe mechanism. Here, the enterprise application subscribes for SMF updates from the intermediary application.
   The advantage of using an intermediary is that only one application on the enterprise side needs to be authenticated and authorised as application function by the 5G network. Furthermore, SMF event notifications only need to be sent to one application function.
C. In a refinement of B, the intermediary application only distributes a subset of the received SMF even notification to the enterprise application, for instance only the GPSI and the IPv6 address.
D. In a refinement of B, the intermediary application infers the device (application) identifier from the SMF event notification and provides it to the enterprise application.
E. The variant leveraging the GSPI is used for layer-two PDU sessions. Here, MAC addresses are used as endpoint identifiers, and they are exposed by the SMF.
F. The access of the device application to the 5G network is mediated by a wireline access network according to ETSI TS 123 316.

### Necessary changes to 3GPP specifications

GPSI-based solution: addition of the GSPI to the PDU establishment information elements and to the pertinent SMF data object.

IPv6-based solution: addition of the device application's IPv6 address to the UE's PDU session request; this becomes the static IPv6 address of the UE.

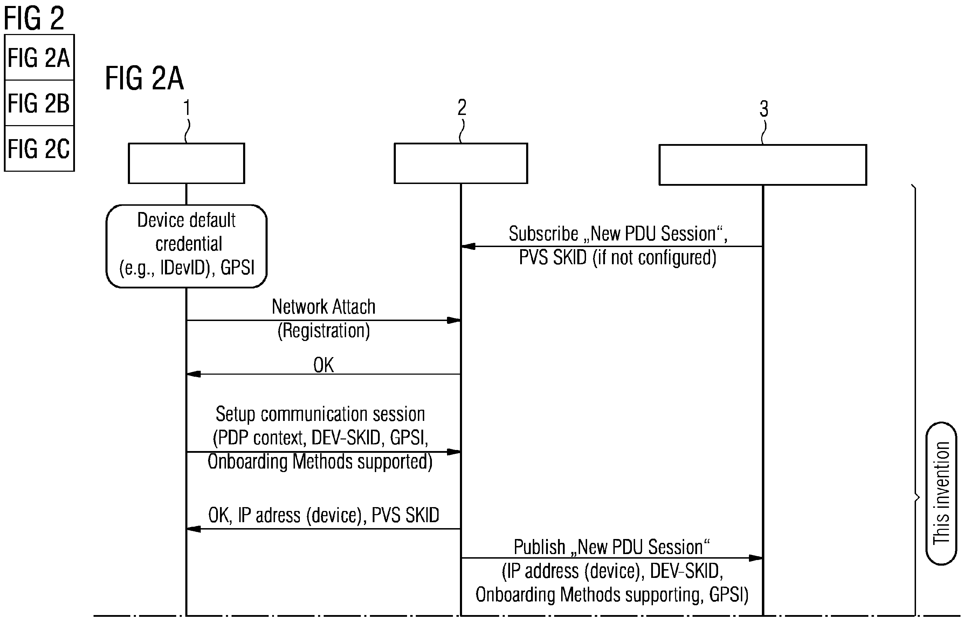

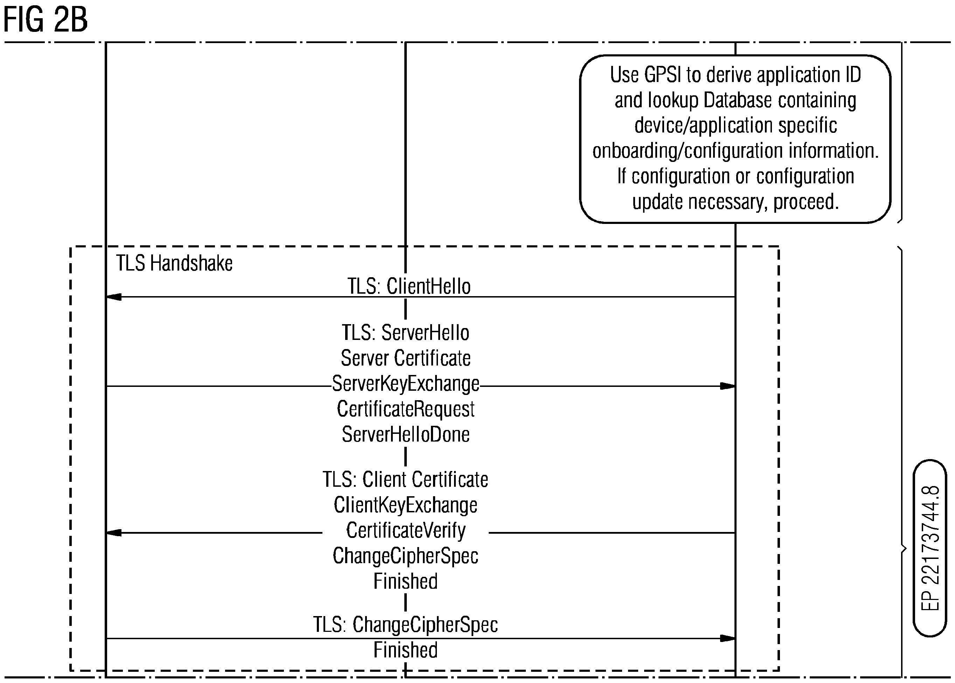

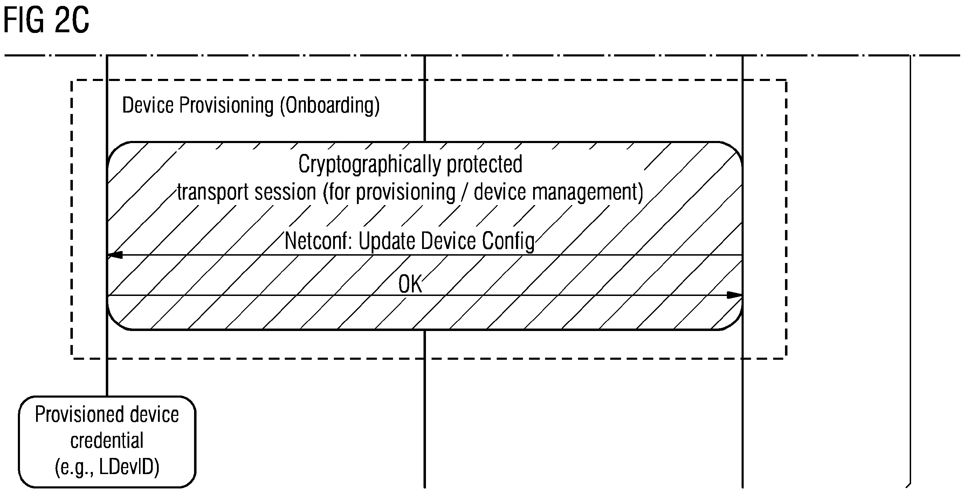

The example illustrated by the flow chart of FIG. 2A to 2C shows how the disclosed solution can be combined with the disclosure of the European patent application 22173744.8. Here, the UE provides information about the onboarding or bootstrapping methods that the device-of which the UE is a part-supports. This information can be provided during the establishment of the PDU session. In a variant, the information provided may also contain information about an existing credential on the device UE, e.g., a manufacturer certificate or the subject key identifier (SKID). Examples for these methods are OPC UA, NETCONF, RESTCONF, CMP, SCEP, EST, BRSKI (and variants). This enables the enterprise application to invoke the methods the device supports. Having the contact information (IP address, credential information, etc.) of the onboarding device available, the enterprise application can leverage the approach described in the European patent application 22173744.8 to provide information about the enterprise application to perform the onboarding. For a provisioning server (PVS), this may be credential information like the s SKID or a fingerprint of the certificate of the PVS or the serial number and the issuer of the PVS certificate.

Upon PDU session establishment, the device provides information about its own credential (here: IDevID) as well as information about its supported onboarding methods (here: NETCONF). As answer, it receives its IP address and also information about the PVS (here: the PVS-SKID).

The PVS is now informed about the new UE and possesses related information (like GPSI, DEV-SKID, supported onboarding-method...). The PVS as enterprise application may then perform a lookup in its device database to query the onboarding and configuration status of the device. If the device is a new device and needs to be configured or if it is a device whose configuration needs to be updated, the PVS contacts the device to provide a local managed credential (here, an LDevID) to the device using the signalled onboarding method (here: NETCONF).

Although the invention has been explained in relation to its preferred embodiments as mentioned above, it is to be understood that many other possible modifications and variations can be made without departing from the scope of the present invention. It is, therefore, contemplated that the appended claim or claims will cover such modifications and variations that fall within the true scope of the invention.

### LIST OF REFERENCE SIGNS

- 1: device
- 1.1: (wireless) transceiver
- 2: 5G communication network
- 3: enterprise communication system

## Claims

1. An automated method for enabling an enterprise communication system (3) to contact a device application of a device (1) which comprises a transceiver (1.1) and which is connected to a 5G communication network (3) via a (radio) communication access network,
- whereby an enterprise application of the enterprise communication system (3) is subscribed to PDU updates from the 5G communication network (2),
- whereby the device application has a unique device application identifier,
- whereby a unique device identifier is provided to the device (1), and
- whereby the device identifier is used by the device (1) during onboarding,
**characterized by** the steps:
i) a PDU (Protocol Data Unit) session is requested by the device (1) from the 5G communication network (2),
ii) the requested PDU session is created by the 5G communication network (2),
iii) information about the new PDU session is added by the session management function (SMF) to a data base of the 5G communication network (2),
iv) the enterprise application is informed by the 5G communication network (2) about the new PDU session,
v) the device identifier or the device application identifier is inferred by the enterprise application from the information provided by the SMF,
vi) if the device application identifier and/or the device identifier matches a list of identifiers or application types, the enterprise application is contacting the device application by using the information contained in the received PDU event notification, whereby the list is stored in the enterprise communication system.

2. The method according to claim 1, whereby
the device identifier is a unique generic public subscription identifier (GPSI).

3. The method according to claim 2, whereby
the GPSI generation is based on the device application identifier to guarantee a one-to-one relation between GSPI and the device application identifier.

4. The method according to claim 3, whereby
the GPSI generation is also based on the device identifier to guarantee a one-to-one relation between the GPSI and the device identifier.

5. The method according to one of the claims 2 to 4, whereby the GPSI is part of the PDU session information that is stored in a pertinent data base of the SMF.

6. The method according to one of the claims 2 to 5, whereby the enterprise application retrieves the wireless transceiver's address and the GPSI from the SMF event notification that is issued after the new PDU session has been established,
the enterprise application retrieves the device application identifier from the GPSI, and
if provided, the enterprise application also retrieves the device identifier from the GPSI.

7. The method according to one of the claims 2 to 6, whereby the enterprise application uses the IP or MAC address contained in the SMF event notification for sending data packets to the device application via the user plane function (UPF) .

8. The method according to claim 1, whereby
the device identifier and/or the device application identifier is an IPv6 address, which is provided to the wireless transceiver by the device application or a device middleware, whereby the IPv6 address contains the device application identifier to ensure a one-to-one relation between the IPv6 address and the device application identifier.

9. The method according to claim 8, whereby the IPv6 also contains the device identifier to ensure a one-to-one relation between the IPv6 address and the device identifier.

10. The method according claim 8 or 9, whereby
the enterprise application retrieves the wireless transceiver's IPv6 address from the SMF event notification that is issued after the new PDU session has been established.

11. The method according to one of the claims 8 to 10 whereby the enterprise application retrieves the device application identifier from the IPv6 address.

12. The method according to claim 11, whereby
if provided, the enterprise application also retrieves the device identifier from the IPv6 address.

13. The method according to one of the claims 8 to 12, whereby
the enterprise application uses the IPv6 address when sending data packets to the device application via the user plane function (UPF).

14. Arrangement designed and configured to perform the method according to one of the claims 1 to 13.
